# EUROPEAN PATENT APPLICATION

(11) **EP 4 738 848 A1**
(43) Date of publication of application: **06.05.2026**
(21) Application number: 25207447.1
(22) Date of filing: 08.10.2025
(51) Int. Cl.: H04N 21/442, G10L 19/018, H04N 21/8358

(54) **UPDATING A WATERMARK ACCUMULATION BUFFER TO AVOID FALSE DETECTIONS**

(30) Priority: 04.11.2024 US 202463715979 P; 19.09.2025 US 202519333622
(71) Applicant: The Nielsen Company (US), LLC, New York, NY 10010 (US)
(72) Inventor: Kuznetsov, Vladimir, Ellicott City (US); Gish, David, Riverdale (US)
(74) Representative: Anderson, Oliver Ben

(57) **Abstract**

An example method includes decoding a portion of audio so as to determine, for respective symbol slots of a watermark, current strength values for respective symbols. The method also includes determining, for the respective symbol slots, expected symbols of an expected message. In addition, the method includes determining a current score for the portion of audio using current strength values for the expected symbols and averages of current strength values for unexpected symbols. The method also includes determining an accumulation score for the portion of audio using accumulated strength values for the expected symbols and averages of accumulated strength values for the unexpected symbols. And the method includes, based on a detected divergence between the current score and the accumulation score, reinitializing the accumulated strength values for the expected symbols and the accumulated strength values for the unexpected symbols.

## Description

### CROSS-REFERENCE TO RELATED APPLICATIONS

This application claims the benefit of U.S. Provisional Application No. 63/715,979, filed on November 4, 2024, and of U.S. Patent Application No. 19/333,622, filed on September 19, 2025, the entire contents of which are hereby incorporated by reference.

### BACKGROUND

Watermarking can be used to insert additional information into media. For example, watermark encoders sometimes embed audio watermarks in audio signals to convey media identification information. By detecting watermarks present in television broadcasts, radio broadcasts, and/or streamed multimedia, an audience measurement entity (AME) can monitor the distribution and/or use of media.

An accumulation buffer is a technique that allows an audio watermark to be decoded despite high levels of acoustic noise. As a simplified example, to detect a symbol of a first watermark message, a watermark decoder may measure watermark symbol values corresponding to each possible symbol value the symbol may have. Further, the watermark decoder may store the measured watermark symbol values in a buffer. When detecting the same symbol of a second watermark message, the watermark decoder may again measure watermark symbol values for the possible symbol values, and combine the measured watermark symbol values with the previously measured watermark symbol values stored in the buffer. The watermark decoder can then decode the symbol for the second watermark message using the accumulated watermark symbol values, as opposed to decoding the symbol for the second watermark message using solely the measured watermark symbol values for the second message.

### SUMMARY

Disclosed herein are systems and methods for decoding watermarks in a manner that reduces false watermark detections that may occur due to the use of an accumulation buffer technique. Within examples, a watermark decoder reinitializes values stored in a buffer based on detecting a divergence between measured strength values of a current watermark message and strength values accumulated over multiple watermark messages. This allows the watermark decoder to more quickly detect changes in watermarked media.

In one aspect, a computing system is described. The computing system includes a processor and a memory, and is configured to perform a set of acts. The set of acts includes decoding a portion of audio so as to determine, for respective symbol slots of a watermark, current strength values for respective symbols. The set of acts also includes determining, for the respective symbol slots, expected symbols of an expected message. In addition, the set of acts includes determining a current score for the portion of audio using current strength values for the expected symbols and averages of current strength values for unexpected symbols. The set of acts also includes determining an accumulation score for the portion of audio using accumulated strength values for the expected symbols and averages of accumulated strength values for the unexpected symbols. And the set of acts includes, based on a detected divergence between the current score and the accumulation score, reinitializing the accumulated strength values for the expected symbols and the accumulated strength values for the unexpected symbols.

In another aspect, a method is described. The method decoding, by a computing system, a portion of audio so as to determine, for respective symbol slots of a watermark, current strength values for respective symbols. The method also includes determining, by the computing system, for the respective symbol slots, expected symbols of an expected message. In addition, the method includes determining, by the computing system, current score for the portion of audio using current strength values for the expected symbols and averages of current strength values for unexpected symbols. The method also includes determining, by the computing system, an accumulation score for the portion of audio using accumulated strength values for the expected symbols and averages of accumulated strength values for the unexpected symbols. And the method includes, based on a detected divergence between the current score and the accumulation score, reinitializing, by the computing system, the accumulated strength values for the expected symbols and the accumulated strength values for the unexpected symbols.

In another aspect, a non-transitory computer-readable medium is described. The non-transitory computer-readable medium has stored thereon instruction, that upon execution by a computing system, cause the computing system to perform a set of acts. The set of acts includes decoding a portion of audio so as to determine, for respective symbol slots of a watermark, current strength values for respective symbols. The set of acts also includes determining, for the respective symbol slots, expected symbols of an expected message. In addition, the set of acts includes determining a current score for the portion of audio using current strength values for the expected symbols and averages of current strength values for unexpected symbols. The set of acts also includes determining an accumulation score for the portion of audio using accumulated strength values for the expected symbols and averages of accumulated strength values for the unexpected symbols. And the set of acts includes, based on a detected divergence between the current score and the accumulation score, reinitializing the accumulated strength values for the expected symbols and the accumulated strength values for the unexpected symbols.

### BRIEF DESCRIPTION OF THE DRAWINGS

Figure 1 is a conceptual illustration of an example measurement process.
Figure 2 is a simplified block diagram of an example media monitoring system.
Figure 3 illustrates the structure of an example watermark.
Figure 4 illustrates example strength values for symbols of a watermark.
Figure 5 is a conceptual illustration of accumulating strength values in a buffer.
Figure 6 is a conceptual illustration of an expected message and current strength values that can be used to determine a current score.
Figure 7 is a conceptual illustration of accumulated strength values that can be used to determine an accumulation score.
Figure 8 is a conceptual illustration of a divergence between a current score and an accumulation score.
Figure 9 is a flow chart of an example method.
Figure 10 is a simplified block diagram of an example computing device.

### DETAILED DESCRIPTION

### I. Overview

In some instances, a watermark decoder decodes a watermark symbol using watermark symbol values accumulated over multiple messages and stored in a buffer. Using the buffer allows the watermark decoder to compensate for acoustic noise (e.g., interference noise and/or acoustic distortions). Such acoustic noise can occur, for example, when people are talking over media that is presented in a media environment, a person is vacuuming while media is presented, or media is presented in a moving vehicle. Moreover, the accumulation buffer technique lends itself to scenarios where a same watermark message is repeated multiple times per minute. This can occur, for example, when a same message (or a portion of the message) is repeatedly encoded within the audio signal of a television show or commercial.

In an audience measurement system, it can be desirable to quickly detect changes in watermarked content, so that the resulting measurement data is more accurate. Unfortunately, however, using a buffer that stores a history of measured watermark symbol values can hinder the ability of a watermark decoder to quickly detect changes in watermarked audio, such as channel changes, muting/unmuting, unencoded commercials, playback modifications (e.g., fast forward, rewind, etc.). For instance, a buffer may store measured watermark symbol values for a history of twenty seconds, a minute, or more than a minute. With this approach, a watermark decoder can sometimes falsely interpret the data stored in the buffer to mean that a watermark message is present despite the watermark message no longer being present and/or changing to a new watermark message. This effect is known as a "dieseling" or "lingering" accumulator. Systems and methods to address this and potentially other issues are described herein.

As described herein, an example computing system decodes a portion of audio so as to determine, for respective symbol slots of a watermark, current strength values for respective symbols. The computing system also determines, for the respective symbol slots, expected symbols of an expected message. The computing system then uses current strength values for the expected symbols and averages of current strength values for unexpected symbols to determine a current score for the portion of audio. Similarly, the computing system determines an accumulation score for the portion of audio using accumulated strength values for the expected symbols and averages of accumulated strength values for the unexpected symbols. The computing system uses the current score and the accumulation score as a basis to determine whether or not to clear the accumulated strength values stored in a buffer. For instance, based on a detected divergence between the current score and the accumulation score, the computing system reinitializes the accumulated strength values for the expected symbols and the accumulated strength values for the unexpected symbols. In some examples, reinitializing the accumulated strength values prevents false watermark detections from dieseling or lingering after the watermarked content has changed.

### II. System Architecture

### a. Example Measurement Process

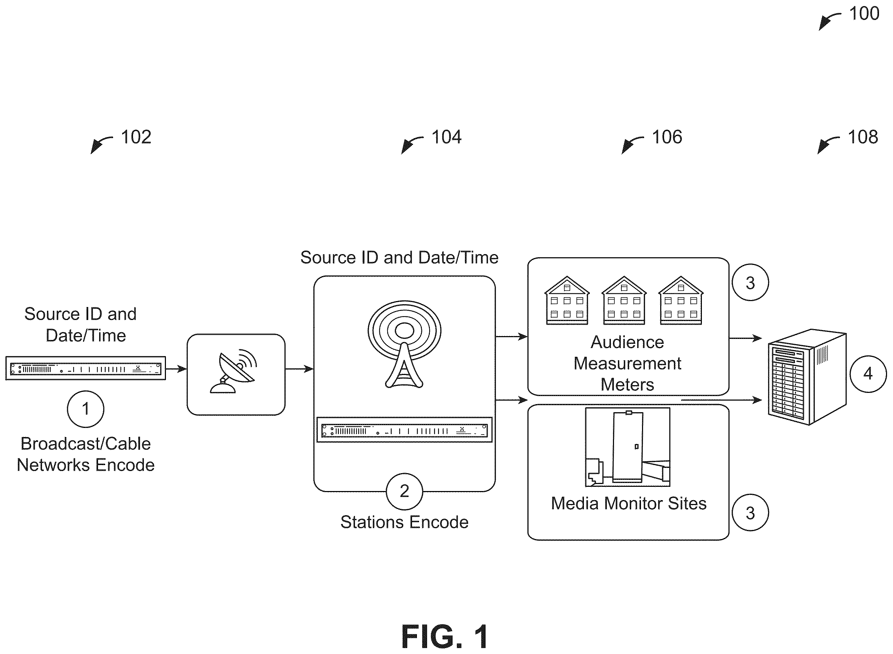

Figure 1 is a conceptual illustration of an example measurement process 100. Measurement process 100 depicts operations that can be carried out within an audience measurement system. More specifically, Figure 1 shows measurement process 100 as including a first stage 102, a second stage 104, a third stage 106, and a fourth stage 108.

As part of first stage 102, a broadcast/cable network encodes watermarks into media content using an encoder. A watermark is any identification information that may be inserted or embedded in the audio or video of media (e.g., a program or an advertisement) for the purpose of identifying the media. In other words, the watermark can include an audio watermark or a video watermark. In some examples, the watermark is imperceptible to humans. By way of example, during first stage 102, a television network can encode an audio watermark into media. The audio watermark can include a source identifier (e.g., a station identifier) as well as a date and/or time.

After the watermark is inserted, the broadcast/cable network distributes the watermarked media to a television station, such as a local television station for a geographic region. At second stage 104, the television station encodes watermarks into the media. For instance, the television station can encode watermarks into local media that is specific to the geographic region, such as advertisements or local programming. The television station then distributes the watermarked media to various households in the geographic region.

During third stage 106, an audience measurement meter in a panelist household monitors media content that is presented within the panelist household. For instance, the audience measurement meter detects the watermarks and decodes the watermarks so as to reveal the identification information (i.e., the source identifier and date and/or time).

The audience measurement meter reports identification information to a remote computing system of an AME. For instance, the audience measurement meter may be connected to a local network of the panelist household, such that the audience measurement meter can transmit the identification information to the remote computing system via the local network and the internet. Or the audience measurement meter can transmit the identification to the remote computing system using a cellular modem of the audience measurement meter.

In some examples, the AME provides the audience measurement meter to the panelist household such that the audience measurement meter may be installed in a media presentation environment of the panelist household. The audience measurement meter can be installed by a panelist by simply powering the audience measurement meter and placing the audience measurement meter near a presentation device (e.g., a television). Alternatively, a field representation of the AME may visit the panelist household to install and configure the audience measurement meter.

In some examples, to monitor media presented by the presentation device, the audience measurement meter senses audio (e.g., acoustic signals or ambient audio) output by the presentation device. For example, the audience measurement meter processes the signals obtained from the media presentation device to detect media and/or source identifying signals (e.g., audio watermarks) embedded in the media presented by the presentation device. In some examples, the audience measurement meter includes a microphone array to sense ambient audio. Additionally or alternatively, the audience measurement meter may directly receive audio signals from the presentation device via a wired or wireless connection with the presentation device.

In some examples, the audience measurement meter can sense video output by the presentation device, and utilize video watermarking to obtain identification information for the media presented by the presentation device.

Further, instead of or in addition to detecting watermarks, the audience measurement meter can utilize fingerprint-based media identification techniques. Unlike media monitoring techniques based on watermarks included with and/or embedded in the monitored media, fingerprint-based media monitoring techniques generally use one or more inherent characteristics of the monitored media during a monitoring time interval to generate a substantially unique proxy for the media. Such a proxy is referred to as fingerprint, and can take any form representative of any aspect of the media signal (e.g., the audio and/or video signals forming the media presentation being monitored).

Fingerprint-based media monitoring generally involves determining signatures representative of a media signal output by a monitored presentation device and comparing the monitored signatures to one or more reference signatures corresponding to known media sources. To facilitate this comparison, the audience measurement meter generates signatures, and transmits the signatures to the remote computing system of the AME. In addition, a plurality of media monitor sites receive media content distributed within a geographic region, generate reference signatures for the media content, and associate identification information with the reference signatures. The identification information can include any combination of a date/time, channel, or media identifier. Alternatively, the audience measurement meter can compare a generated signature against a reference database of signatures stored by the audience measurement meter. Various comparison criteria, such as a cross-correlation value or a Hamming distance, can be evaluated to determine whether a generated signature matches a particular reference signature. After matching the generated signature with a signature of the reference database, the audience measurement meter can report metadata associated with the matching signature (e.g., a media title, a presentation time, and/or a broadcast channel) to the remote computing system of the AME.

In some examples, to generate exposure data for the media, identification information for media to which the panelists in a panelist household are exposed is correlated with people data (e.g., presence information) collected by the audience measurement meter. By way of example, the audience measurement meter collects inputs (e.g., audience identification data) representative of the identities of the panelists. The audience measurement meter can collect audience identification data by periodically or a-periodically prompting panelists in the media presentation environment to identify themselves as present in the audience. Panelists can indicate their presence by pressing an appropriate key on an input device, such as a remote control, a touchscreen, or an application running on a mobile device. Alternatively, the audience measurement meter can collect audience identification data by capturing images of the media presentation environment with a camera and analyzing the images via face recognition to identify which panelist(s) are present in the media presentation environment. Likewise, the audience measurement meter can collect audience identification data by detecting the presence of a portable device (e.g., a wearable bracelet, a watch, a smartphone) that is associated with a panelist in the media presentation environment.

Although first stage 102, second stage 104, and third stage 106 are described with respect to a television station that distributes watermarked media, the example is not meant to be limiting. In a similar manner, a radio network or radio station can encode watermarks into radio content that is distributed by a radio station. An audience measurement meter worn or carried by the panelist can then detect and decode the watermarks.

During fourth stage 108, the remote computing system processes and stores data received from the audience measurement meters and optionally the media monitor sites. For example, the remote computing system combines audience identification data and identification information from multiple panelist households to generate aggregated media monitoring information. In some instances, the remote computing system generates reports for advertisers, program producers, and/or other interested parties based on the compiled statistical data. Such reports can include extrapolations about the size and demographic composition of audiences of content, channels, and/or advertisements based on the demographics and behavior of the monitored panelists. The remote computing system can leverage demographic data collected from panelists during registration of the panelists with the AME.

In examples in which the remote computing system receives reference signatures, the remote computing system can compare signatures received from panelist households with the reference signatures. Various comparison criteria, such as a cross-correlation value or a Hamming distance, can be evaluated to determine whether a monitored signature matches a particular reference signature. When a match between the monitored signature and one of the reference signatures is found, the monitored media can be identified as corresponding to the particular reference media represented by the reference signature that matched the monitored signature. Because attributes, such as an identifier of the media, a presentation time, a broadcast channel, etc., are collected for the reference signature, these attributes may then be associated with the monitored media whose monitored signature matched the reference signature.

### b. Example Media Monitoring System

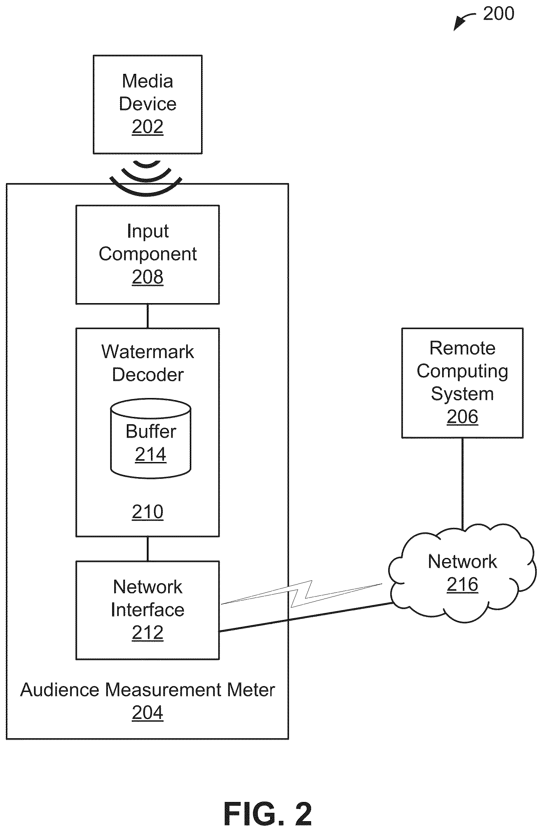

Figure 2 is a simplified block diagram of an example media monitoring system 200 in which various described operations can be implemented. As shown in Figure 2, media monitoring system 200 includes a media device 202, an audience measurement meter 204, and a remote computing system 206. Audience measurement meter 204, in turn, includes an input component 208, a watermark decoder 210, and a network interface 212.

Media monitoring system 200 supports monitoring of media presented at a media presentation environment, such as a panelist household, a commercial business, or within a vehicle. Media device 202 can be a computing system configured to output any type of media content, such as television content, radio content, movies, Internet video, video-on-demand, etc. In some examples, media device 202 is a television. In other examples, media device 202 is a computer or a mobile device. In still other examples, media device 202 is a radio.

Audience measurement meter 204 is configured to determine metering data that may identify and/or be used to identify media presented by media device 202. For example, audience measurement meter 204 can be configured to determine metering data by detecting watermarks based on the media content output by media device 202. In some examples, audience measurement meter 204 is also configured to determine signatures based on the media content output by media device 202.

Examples of watermarks include identification codes, ancillary codes, etc., that may be transmitted within media signals. For example, identification codes can be transmitted as watermarked data embedded or otherwise included with media (e.g., inserted into the audio, video, or metadata stream of media) to uniquely identify broadcasters and/or media (e.g., content or advertisements). Watermarks can additionally or alternatively be used to carry other types of data, such as copyright protection information, secondary data (e.g., such as one or more hyperlinks pointing to secondary media retrievable via the Internet and associated with the primary media carrying the watermark), commands to control one or more devices, etc. Watermarks can be extracted using a decoding operation.

In contrast, signatures are a representation of some characteristic of the media signal (e.g., a characteristic of the frequency spectrum of the signal). Signatures can be thought of as fingerprints. They are typically not dependent upon insertion of data in the media, but instead preferably reflect an inherent characteristic of the media and/or the signal transporting the media.

Audience measurement meter 204 can be a dedicated portable device constructed to monitor media environments. For instance, audience measurement meter 204 can include a computing system that is designed to be carried or worn by a panelist of the AME. Alternatively, audience measurement meter 204 can be a portable device capable of being adapted (e.g., via software) to monitor media environments. For instance, audience measurement meter 204 can be a smartphone, watch, tablet computer, or wearable device. In some examples, audience measurement meter 204 is a device that is designed to be positioned near, and optionally attached to media device 202 and remain relatively stationary. For instance, audience measurement meter 204 can include a television meter. In still other examples, audience measurement meter 204 can be implemented by or otherwise included in media device 202 (not shown). For instance, media device 202 can be configured to execute a media monitoring application that functions as watermark decoder 210.

Input component 208 of audience measurement meter 204 is configured to detect media content output by media device 202. For instance, input component 208 can include a microphone or microphone array. Alternatively, input component 208 can include a line-in interface that receives an audio signal via a cable that is connected to an output interface of media device 202. As yet another example, input component 208 can include a wireless interface that receives an audio signal via a wireless communication link between media device 202 and audience measurement meter 204. Additionally or alternatively, input component 208 can include a camera configured to obtain image data that is indicative of media content displayed by media device 202. With this approach, watermark decoder can detect video watermarks.

Watermark decoder 210 is configured to detect watermarks in media output by media device 202. In some examples, watermark decoder 210 is structured to process audio data/signals obtained by input component 208 to detect symbols of instances of a watermark that are encoded in one or more frequencies of the sensed audio data/signals, or otherwise encoded in the frequency domain of the sensed audio data/signals. Examples of encoding watermarks in the frequency domain of an audio signal, and corresponding example watermark detection techniques that may be implemented by watermark decoder 210, are described in U.S. Pat. No. 8,359,205, entitled "Methods and Apparatus to Perform Audio Watermarking and Watermark Detection and Extraction," which issued on Jan. 22, 2013, and U.S. Pat. No. 8,369,972, entitled "Methods and Apparatus to Perform Audio Watermarking Detection and Extraction," which issued on Feb. 5, 2013, each of which are hereby incorporated by reference in their entireties. U.S. Pat. No. 8,359,205 and U.S. Pat. No. 8,369,972 describe example watermarking systems in which a watermark is included in an audio signal by manipulating a set of frequencies of the audio signal.

In other examples, watermark decoder 210 is structured to process video data/signals obtained by input component 208 to detect symbols of instances of a watermark that are encoded in sensed video data/signals. One of ordinary skill in the art will appreciate, however, that the examples are not meant to be limiting. The detection techniques are applicable to other watermarking systems as well, with appropriate modifications.

Watermark decoder 210 includes an example buffer 214 to store measured watermark symbol values determined by watermark decoder 210. In some examples, to detect a watermark symbol, watermark decoder 210 determines measured watermark symbol values corresponding to each possible symbol value a watermark symbol may have. For example, for a given symbol slot of watermark, watermark decoder 210 may determine measured watermark signal-to-noise (SNR) values corresponding to each of multiple possible symbol values a symbol may have. Watermark decoder 210 then stores the measured watermark symbol values in buffer 214 for further processing. Buffer 214 may be implemented by any appropriate memory, such as one or more of the memory types described herein.

Watermark decoder 210 can be configured to implement any of the watermark decoder functions described herein. By way of example, watermark decoder 210 can be configured to decode a portion of audio so as to determine current strength values for respective symbols, determine expected symbols of an expected message, determine a current score for the portion of audio, determine an accumulation score for the portion of audio, and reinitialize values stored in buffer 214 based on a detected divergence between the current score and the accumulation score.

Network interface 212 is configured to communicate data determined by audience measurement meter 204 to remote computing system 206 via a network 216. In this regard, network interface 212 can include a communication device (e.g., a transmitter, receiver, transceiver, modem, network card, etc.) that facilities wired or wireless communication between audience measurement meter 204 and network 216. Network 216 can include any type and/or number of wired and/or wireless data networks.

In line with the discussion above, remote computing system 206 is configured to process and store data received from audience measurement meters, such as audience measurement meter 204. In some examples, remote computing system 206 combines identification information from multiple panelists to generate aggregated media monitoring information. In some instances, remote computing system 206 generates reports for advertisers, program producers, and/or other interested parties based on the compiled statistical data. Such reports can include extrapolations about the size and demographic composition of audiences of content, channels, and/or advertisements based on the demographics and behavior of the monitored panelists. Remote computing system 206 can leverage demographic data collected from panelists during registration of the panelists with the AME.

### c. Example Watermark and Strength Values

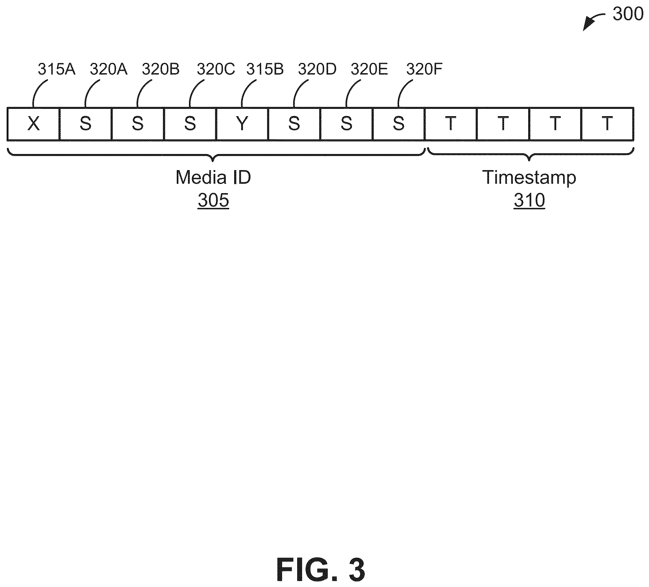

Figure 3 illustrates the structure of an example watermark 300 that audience measurement meter 204 may be configured to detect. Watermark 300 is embedded or otherwise included in media to be presented by media device(s), such as media device 202. For example, watermark 300 may be embedded in an audio portion (e.g., an audio data portion, an audio signal portion, etc.) of the media, a video portion (e.g., a video data portion, a video signal portion, etc.) of the media, or a combination thereof. Watermark 300 includes an example first group of symbols 305 and an example second group of symbols 310. Symbols from first group of symbols 305 and second group of symbols 310 occupy respective symbol slots. In the illustrated example of FIG. 3, first group of symbols 305 is repeated in successive watermarks embedded/included in the media, whereas second group of symbols 310 differs between successive watermarks embedded/included in the media.

In the example of FIG. 3, first group of symbols 305 conveys media identification data (e.g., a media identifier) identifying the media watermarked by watermark 300. For example, the media identification data conveyed by first group of symbols 305 may include data identifying a broadcast station providing the media, a name (e.g., program name) of the media, a source (e.g., a website or platform) of the media, etc. Thus, in the illustrated example of FIG. 3, first group of symbols 305 is also referred to as a first group of media identification symbols (or simply media identification symbols).

In some examples, first group of symbols 305 of watermark 300 includes example marker symbols 315A-B to assist a watermark decoder in detecting the start of watermark 300 in the watermarked media, and example data symbols 330A-F to convey the media identification data. Also, in some examples, corresponding symbols pairs in similar respective locations after first marker symbol 315A and second marker symbol 315B are related by an offset. For example, the value of data symbol 330D may correspond to the value of data symbol 330A incremented by an offset, the value of data symbol 330E may correspond to the value of data symbol 330B incremented by the same offset, and the value of data symbol 330F may correspond to the value of data symbol 330C incremented by the same offset, as well. In such examples, the symbols pairs 320A/D, 320B/E and 320C/F are referred to as symbol offset pairs, or offset pairs, and the offset used to generate the symbol offset pairs forms an additional data symbol that can be used to convey the media identification data.

In the example of FIG. 3, second group of symbols 310 conveys timestamp data (e.g., a timestamp) identifying, for example, a particular elapsed time within the watermarked media. Thus, in the illustrated example of FIG. 3, second group of symbols 310 is also referred to as the second group of timestamp symbols (or simply the timestamp symbols). Furthermore, the timestamp data conveyed by second group of symbols 310 (e.g., the timestamp symbols) differs in successive watermarks embedded/included in the media (e.g., as the elapsed time of the watermarked media increases with each successive watermark).

In the illustrated example of FIG. 3, watermark 300 is embedded/included in the desired media at a repetition interval of T seconds (or, in other words, at a repetition rate of 1/T seconds), with first group of symbols 305 remaining the same in successive watermarks, and second group of symbols 305 varying in successive watermarks. For example, the repetition interval T may correspond to T=4.8 seconds. As there are 12 symbols in watermark 300 (e.g., eight symbols in first group of symbols 305 and four symbols in second group of symbols 310) each watermark symbol has a duration of 4.8/12=0.4 seconds. However, other values for the repetition interval T may be used in other examples.

In some examples, a watermark symbol included in the watermark 300 is able to take on one of several possible symbol values. For example, if a symbol in watermark 300 represents four bits of data, then the symbol can take on one of sixteen different possible values. For example, each possible symbol value may correspond to a different signal amplitude, a different set of code frequencies, etc. In some such examples, to detect a watermark symbol embedded/included in watermarked media, a watermark decoder processes monitored media data/signals output from a media device to determine measured values (e.g., signal-to-noise ratio (SNR) values) corresponding to each possible symbol value the symbol may have. The watermark decoder then selects the symbol value corresponding to the best (e.g., strongest, largest, etc.) measured value as the detected symbol value for that particular watermark symbol.

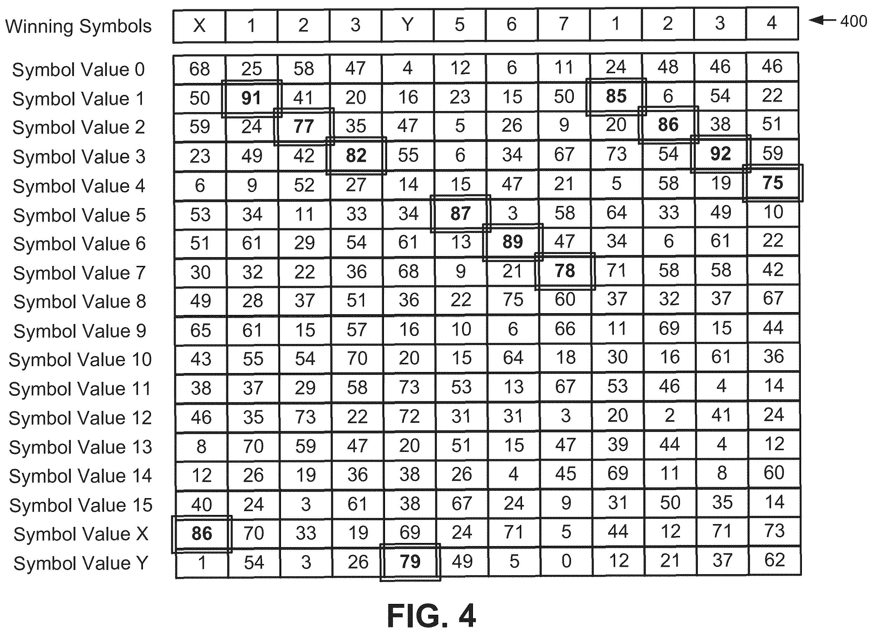

By way of example, Figure 4 illustrates example strength values determined by a watermark decoder. As shown in Figure 4, for each symbol slot of first group of symbols 305 and second group of symbols 310, the strength values include a respective strength value for each of 18 possible symbols. A watermark decoder determines, for each symbol slot, a symbol value having a highest measured strength value. In Figure 4, the symbol values having the highest measured strength value within a symbol slot are highlighted by a bold rectangle. The watermark decoder can form a message 400 by combining the winning symbols for each of the symbol slots.

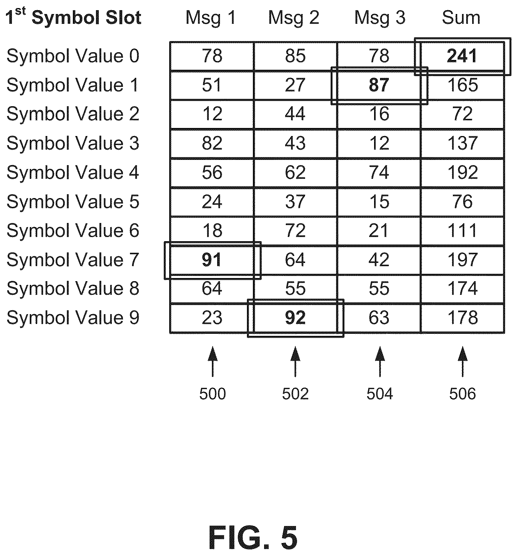

In line with the discussion above, in some examples, a watermark decoder tracks strength values overtime by combining measured strength values with previously measured strength values stored in a buffer. To that effect, Figure 5 is a conceptual illustration of accumulating strength values in a buffer. More specifically, Figure 5 shows measured strength values for ten possible symbol values of a single symbol slot. In this example, first strength values 500 are measured based on a first message encoded as a first watermark, second strength values 502 are measured based on a second message encoded as a second watermark, and third strength values 504 are measured based on a third message encoded as a third watermark.

For each of the first, second, and third message, the actual symbol value encoded in the symbol slot was symbol value zero. When analyzing the strength values for the first, second, and third message, individually, the symbol value zero is not the winning symbol. For instance, the winning symbol values for the first, second, and third message, respectively, are symbol value seven, symbol value nine, and symbol value one. For each message, acoustic noise can mask the winning symbol and cause erroneous strength values for other symbol values.

However, in this example, combining the strength values across all three messages indicates that the winning symbol value is indeed symbol value zero. For instance, the accumulated strength values 506 add the strength values for each respective symbol value observed across the three messages. As one example, the accumulated strength value for symbol value zero is the sum of 78, 86, and 78, which is 241. As another example, the accumulated strength value for symbol value one is the sum of 51, 27, and 87, which is 165.

Interestingly, the accumulated strength values 506 indicate that the symbol value with the highest combined strength value is symbol value zero, despite symbol value not being the winning symbol for any of the first, second, and third messages individually. Hence, accumulating strength values over time can lead to more accurate decoding of watermark messages.

### III. Example Operations

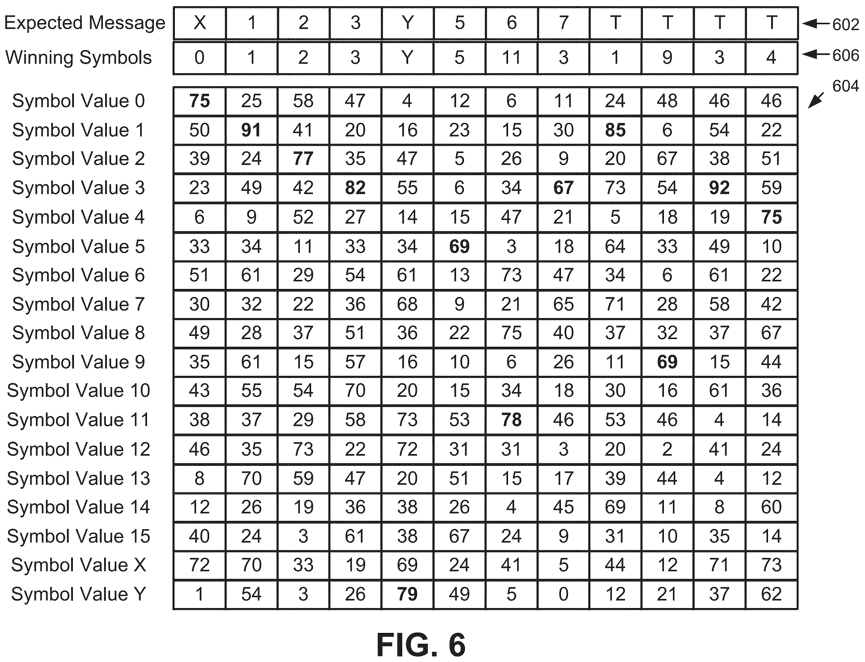

The audience measurement meter 204 and/or components thereof can be configured to perform and/or can perform one or more operations. Examples of these operations and related features will now be described with reference to Figures 6-9.

### a. Determining a Current Score

**In** line with the discussion above, a watermark decoder can leverage a detected divergence between a current score and an accumulation score as a basis to reinitialize accumulated strength values that are stored in a buffer. In some examples, the watermark decoder decodes a portion of audio so as to determine, for respective symbol slots of a watermark, current strength values for respective symbols. As noted above, the current strength values can include SNR values, for instance.

Further, the watermark decoder also determines, for the respective symbol slots, expected symbols of an expected message. For instance, the watermark decoder can determine, as the expected message, a most recent message that was verified as a valid message. Or the watermark decoder can determines, as the expected message, a valid message that was previously decoded within a threshold time of the decoding of the portion of audio. The threshold time may be a multiple (e.g., 1x, 2x, 3x) of the repetition interval at which watermarks are decoded. In some examples, the watermark decoder verifies that a message is a valid message using one or more checksums. One example of a checksum is an offset between symbol offset pairs. Another example of a checksum is the presence of symbol markers within appropriate symbol slots.

Figure 6 is a conceptual illustration of an expected message 602 and current strength values 604 that can be used to determine a current score. As shown in Figure 6, expected message 602 includes eight media identification symbols and four timestamp symbols. The twelve symbols occupy twelve respective symbol slots. The eight media identification symbols include two marker symbols, symbol value X and symbol value Y, and six other symbol values. The eight media identification symbols are repeated within multiple audio portions of media content. Whereas, the four timestamp symbols vary throughout the media content.

As further shown in Figure 6, each symbol slot includes a current strength value for each possible symbol value. In this example, the current strength values range from 0 (lowest strength) to 99 (highest strength) and are proportional to a measured SNR. In other examples, the current strength values can range from -50 (lowest strength) to 50 (highest strength). Hence, the range can vary depending on the desired implementation.

Watermark decoder uses current strength values 604 to determine winning symbols 606. For instance, for each symbol slot, watermark decoder can select, as a winning symbol, a symbol value having a highest current strength value. For the first symbol slot, the symbol value having the highest current strength value is symbol value 0 having a current strength value of 75. For the second symbol slot, the symbol value having the highest current strength value is symbol value 1 having a current strength value of 91, and so forth.

Watermark decoder can use the current strength values for the expected symbols of expected message 602 and averages of current strength values for the unexpected symbols to determine a current score. For instance, for the first symbol slot, the first expected symbol of expected message 602 is symbol value X. Per Figure 6, the current strength value for symbol value X in the first symbol slot is 72. The average of the current strength values for the other seventeen unexpected symbols is 34. The watermark decoder can determine a current symbol score by dividing the current strength value for the expected symbol by the average of the current strength values for the unexpected symbols. For the first symbol slot, the current symbol score is 72/34 = 2.1.

Similarly, the watermark decoder can determine current symbol scores for the seven other symbol slots carrying media identification symbols. For the example shown in Figure 6, the current symbol scores for the second through eight symbol slots are 2.2, 2.3, 2, 2, 2.8, 2.7, and 2.7, respectively. Further, the watermark decoder can add the current symbol scores for the eight media identification symbols to determine the current score. For the example shown in Figure 6, the sum of the eight current symbol scores is 16.7.

The magnitude of the current score reflects the current strength values of the expected symbols of expected message 602 relative to the current strength values of the unexpected symbols on a per symbol slot basis. With this approach to determining a current score, a high current score is indicative that the current strength values for the expected symbols are relatively strong with respect to the current strength values of the unexpected symbols. Conversely, a lower current score would suggest that the current strength values of the expected symbols are less strong with respect to the current strength values of the unexpected symbols.

### b. Determining an Accumulation Score

Further in line with the discussion above, after measuring current strength values for a portion of audio, the watermark decoder adds the current strength values for the respective symbols to values stored in a buffer so as to obtain accumulated strength values for the respective symbols. The watermark decoder can then use the accumulated strength values to determine an accumulation score for the portion of the audio.

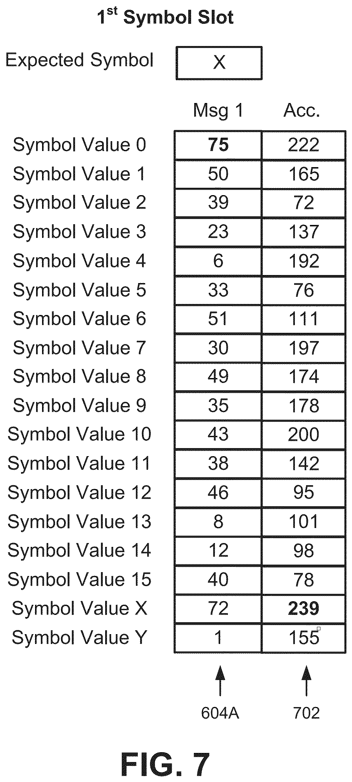

Figure 7 is a conceptual illustration of accumulated strength values 702 that can be used to determine an accumulation score. The conceptual illustration continues with the example described with reference to Figure 6 and assumes that a buffer already stores accumulated strength values for multiple previous portions of audio. In particular, the buffer stores accumulated values for each possible symbol value of each of the eight media identification symbol slots.

As shown in Figure 7, the watermark decoder can add current strength values 604a for symbol values of the first symbol slot to the accumulated values for the first symbol slot stored in buffer to obtain accumulated strength values 702. The example of Figure 7 assumes that, for symbol value 0, the buffer previously held an accumulated value of 147, such that adding the current strength value of 75 to the accumulated value for symbol value 0 of the first symbol slot yields the accumulation strength value of 222. Similarly, for symbol value 1, the prior accumulated value for symbol value 1 of the first symbol slot was 115. For ease of explanation, only accumulated strength values for the symbol values of the first symbol slot are shown. However, the watermark decoder can similarly determine accumulated strength values for each symbol value of each of the seven other media identification symbol slots.

After obtaining accumulated strength values 702, watermark decoder can use the accumulated strength value for the expected symbols of expected message 602 and averages of accumulated strength values for the unexpected symbols to determine an accumulation score. For instance, for the first symbol slot shown in Figure 7, the first expected symbol of expected message 602 is symbol value X. Per Figure 7, the accumulated strength value for symbol value X in the first symbol slot is 239. The average of the accumulated strength values for the other seventeen unexpected symbols is 141. The watermark decoder can determine an accumulation symbol score by dividing the accumulated strength value for the expected symbol by the average of the accumulated strength values for the unexpected symbols. For the first symbol slot, the accumulation symbol score is 239/141 = 1.7.

Similarly, the watermark decoder can determine accumulation symbol scores for the seven other symbol slots carrying media identification symbols. Further, the watermark decoder can add the accumulation symbol scores for the eight media identification symbols to determine the accumulation score.

The magnitude of the accumulation score reflects the accumulated strength values of the expected symbols of expected message 602 relative to the accumulated strength values of the unexpected symbols on a per symbol slot basis. As with the current score, with this approach to determining an accumulation score, a high accumulation score is indicative that the accumulated strength values for the expected symbols are relatively strong with respect to the accumulated strength values of the unexpected symbols. Conversely, a lower accumulation score would suggest that the accumulated strength values of the expected symbols are less strong with respect to the accumulated strength values of the unexpected symbols.

Unlike the current score, however, the accumulation score is biased by the values previously stored in the buffer. In examples where the media identification symbols are unchanged with respect to the prior media identification symbols, the accumulation score will be relatively high. Whereas, if the winning media identification symbols for the message do not agree with the expected media identification symbols (e.g., due to a change in the media presented by a media device), the accumulation score will be lower.

### c. Detecting a Divergence Between a Current Score and an Accumulation

### Score

Further in line with the discussion above, the watermark decoder (or another computing system) can use the current score and the accumulation score for a portion of audio as a basis to determine whether or not to clear the accumulated strength values stored in a buffer. For instance, based on a detected divergence between the current score and the accumulation score, the computing system reinitializes the accumulated strength values for the expected symbols and the accumulated strength values for the unexpected symbols.

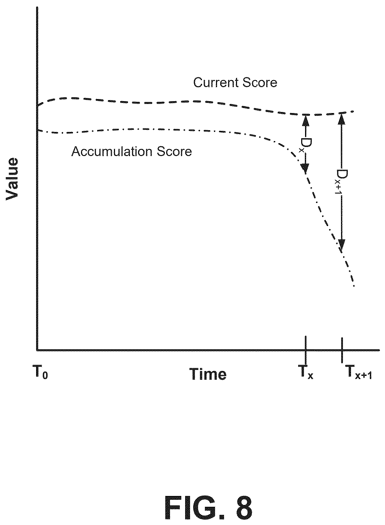

Figure 8 is a conceptual illustration of a divergence between a current score and an accumulation score. In some examples, each time the watermark decoder determines the symbols of a message (e.g., every 4.8 seconds), the watermark decoder also determines a current score and an accumulation score for the message. As shown in Figure 8, at a time Tx, the accumulation score begins to diverge from the current score by an amount Dx. Further, at a time Tx+1, the accumulation score diverges even further, and differs from the current score by an amount Dx+1.

In some examples, the watermark decoder detects a divergence between the current score and the accumulation score by determining that a difference between the accumulation score and the current score satisfies a threshold condition. The threshold condition can include the difference being greater than a threshold amount (e.g., 0.75, 1, 1.5).

In some examples, the watermark decoder detects a divergence between the current score and the accumulation score by determining that a first difference between the accumulation score and the current score is greater than a threshold amount (e.g., 0.5) and that a second difference between the previous current score and the previous accumulation score is also greater than the threshold amount.

Reinitializing the accumulated strength values for the expected symbols and the unexpected symbols can involve reinitializing the accumulated strength values with the current strength values for the respective symbols. Alternatively, reinitializing the accumulated strength values can involve resetting all of the accumulated strength values to zero.

As noted above, reinitializing the accumulated strength values can help prevent false watermark detections from dieseling or lingering after the watermarked content has changed. Hence, the operations described herein reflect an improvement to watermark decoding, an inherently technical endeavor.

### d. Example Method

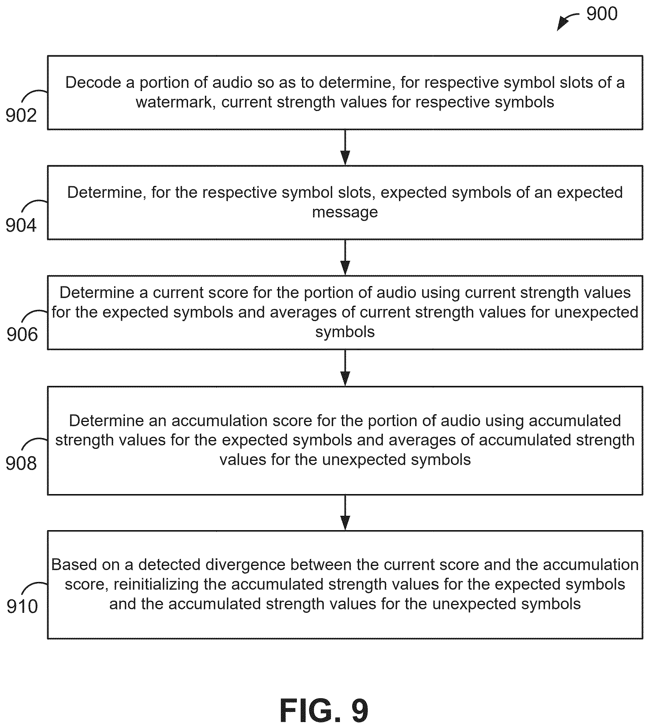

Figure 9 is a flow chart of an example method 900. Method 900 can be carried out by a computing system, such as audience measurement meter 204 or watermark decoder 210 of audience measurement meter. At block 902, method 900 includes decoding a portion of audio so as to determine, for respective symbol slots of a watermark, current strength values for respective symbols. At block 904, method 900 includes determining, for the respective symbol slots, expected symbols of an expected message. At block 906, method 900 includes determining a current score for the portion of audio using current strength values for the expected symbols and averages of current strength values for unexpected symbols. At block 908, method 900 includes determining an accumulation score for the portion of audio using accumulated strength values for the expected symbols and averages of accumulated strength values for the unexpected symbols. And at block 910, method 900 includes, based on a detected divergence between the current score and the accumulation score, reinitializing the accumulated strength values for the expected symbols and the accumulated strength values for the expected symbols and the accumulated strength values for the unexpected symbols.

### IV. Example Computing Device

Any one or more of the above-described components, such as media device 202, audience measurement meter 204, and remote computing system 206 or components of those systems can take the form of a computing device, or a computing system that includes one or more computing devices.

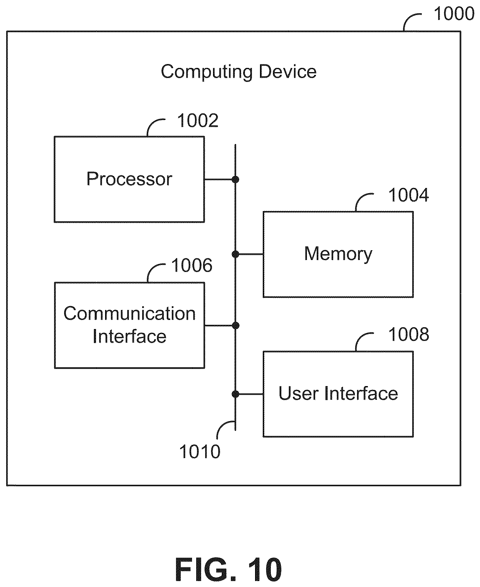

Figure 10 is a simplified block diagram of an example computing device 1000. The computing device 1000 can be configured to perform one or more operations, such as the operations described in this disclosure. As shown, the computing device 1000 can include various components, such as a processor 1002, memory 1004, a communication interface 1006, and/or a user interface 1008. These components can be connected to each other (or to another device, system, or other entity) via a connection mechanism 1010.

The processor 1002 can include one or more general-purpose processors and/or one or more special-purpose processors.

Memory 1004 can include one or more volatile, non-volatile, removable, and/or non-removable storage components, such as magnetic, optical, or flash storage, and/or can be integrated in whole or in part with the processor 1002. Further, memory 1004 can take the form of a non-transitory computer-readable storage medium, having stored thereon computer-readable program instructions (e.g., compiled or non-compiled program logic and/or machine code) that, upon execution by the processor 1002, cause the computing device 1000 to perform one or more operations, such as those described in this disclosure. The program instructions can define and/or be part of a discrete software application. In some examples, the computing device 1000 can execute the program instructions in response to receiving an input (e.g., via the communication interface 1006 and/or the user interface 1008). Memory 1004 can also store other types of data, such as those types described in this disclosure. In some examples, memory 1004 can be implemented using a single physical device, while in other examples, memory 1004 can be implemented using two or more physical devices.

The communication interface 1006 can include one or more wired interfaces (e.g., an Ethernet interface) or one or more wireless interfaces (e.g., a cellular interface, Wi-Fi interface, or Bluetooth^{®} interface). Such interfaces allow the computing device 1000 to connect with and/or communicate with another computing device over a computer network (e.g., a home Wi-Fi network, cloud network, or the Internet) and using one or more communication protocols. Any such connection can be a direct connection or an indirect connection, the latter being a connection that passes through and/or traverses one or more entities, such as a router, switcher, server, or other network device. Likewise, in this disclosure, a transmission of data from one computing device to another can be a direct transmission or an indirect transmission.

The user interface 1008 can facilitate interaction between computing device 1000 and a user of computing device 1000, if applicable. As such, the user interface 1008 can include input components such as a keyboard, a keypad, a mouse, a touch-sensitive panel, a microphone, and/or a camera, and/or output components such as a display device (which, for example, can be combined with a touch-sensitive panel), a sound speaker, and/or a haptic feedback system. More generally, the user interface 1008 can include hardware and/or software components that facilitate interaction between the computing device 1000 and the user of the computing device 1000.

The connection mechanism 1010 can be a cable, system bus, computer network connection, or other form of a wired or wireless connection between components of the computing device 1000.

One or more of the components of the computing device 1000 can be implemented using hardware (e.g., a digital signal processor (DSP), an application-specific integrated circuit (ASIC), a field-programmable gate array (FPGA), another programmable logic device, or discrete gate or transistor logic), software executed by one or more processors, firmware, or any combination thereof. Moreover, any two or more of the components of the computing device 1000 can be combined into a single component, and the function described herein for a single component can be subdivided among multiple components.

### V. Example Variations

Although the examples and features described above have been described in connection with specific entities and specific operations, in some scenarios, there can be many instances of these entities and many instances of these operations being performed, perhaps contemporaneously or simultaneously, on a large-scale basis.

In addition, although some of the operations described in this disclosure have been described as being performed by a particular entity, the operations can be performed by any entity, such as the other entities described in this disclosure. Further, although the operations have been recited in a particular order and/or in connection with example temporal language, the operations need not be performed in the order recited and need not be performed in accordance with any particular temporal restrictions. However, in some instances, it can be desired to perform one or more of the operations in the order recited, in another order, and/or in a manner where at least some of the operations are performed contemporaneously/simultaneously. Likewise, in some instances, it can be desired to perform one or more of the operations in accordance with one more or the recited temporal restrictions or with other timing restrictions. Further, each of the described operations can be performed responsive to performance of one or more of the other described operations. Also, not all of the operations need to be performed to achieve one or more of the benefits provided by the disclosure, and therefore not all of the operations are required.

Although certain variations have been described in connection with one or more examples of this disclosure, these variations can also be applied to some or all of the other examples of this disclosure as well and therefore aspects of this disclosure can be combined and/or arranged in many ways. The examples described in this disclosure were selected at least in part because they help explain the practical application of the various described features.

This specification includes the following enumerated examples: Example 1. A computing system comprising a processor and a memory, the computing system configured to perform a set of acts comprising:
decoding a portion of audio so as to determine, for respective symbol slots of a watermark, current strength values for respective symbols;
determining, for the respective symbol slots, expected symbols of an expected message;
determining a current score for the portion of audio using current strength values for the expected symbols and averages of current strength values for unexpected symbols;
determining an accumulation score for the portion of audio using accumulated strength values for the expected symbols and averages of accumulated strength values for the unexpected symbols; and
based on a detected divergence between the current score and the accumulation score, reinitializing the accumulated strength values for the expected symbols and the accumulated strength values for the unexpected symbols.

Example 2. The computing system of example 1, wherein determining the current score comprises:
for each of two or more of the respective symbol slots: determining a current symbol score using i) the current strength value for the expected symbol value for the respective symbol slot and ii) an average of the current strength values for the unexpected symbols for the respective symbol slot; and
combining the current symbol scores for the two or more respective symbol slots.
Example 3. The computing system of example 1, wherein determining the accumulation score comprises:
   for each of two or more of the respective symbol slots: determining an accumulation symbol score using i) the accumulated strength value for the expected symbol value for the respective symbol slot and ii) an average of the accumulated strength values for the unexpected symbols for the respective symbol slot; and
   combining the accumulation symbol scores for the two or more respective symbol slots.
Example 4. The computing system of example 1, wherein the set of acts further comprises adding the current strength values for the respective symbols to values stored in a buffer so as to obtain the accumulated strength values for the expected symbols and the accumulated strength values for the unexpected symbols.
Example 5. The computing system of example 1, wherein the expected message is a message that: was previously decoded within a threshold time of a time of the decoding of the portion of the audio, and was verified as a valid message.
Example 6. The computing system of example 1, wherein the set of acts further comprises detecting the divergence by determining that a difference between the accumulation score and the current score satisfies a threshold condition.
Example 7. The computing system of example 1, wherein reinitializing the accumulated strength values for the expected symbols and the accumulated strength values for the unexpected symbols comprises reinitializing the accumulated strength values for the expected symbols and the accumulated strength values for the unexpected symbols with the current strength values for the respective symbols.
Example 8. The computing system of example 1, wherein the set of acts further comprises obtaining the portion of audio using a microphone.
Example 9. The computing system of example 1, wherein the computing system is a component of an audience measurement meter.
Example 10. A method comprising:
   decoding, by a computing system, a portion of audio so as to determine, for respective symbol slots of a watermark, current strength values for respective symbols;
   determining, by the computing system for the respective symbol slots, expected symbols of an expected message;
   determining, by the computing system, a current score for the portion of audio using current strength values for the expected symbols and averages of current strength values for unexpected symbols;
   determining, by the computing system, an accumulation score for the portion of audio using accumulated strength values for the expected symbols and averages of accumulated strength values for the unexpected symbols; and
   based on a detected divergence between the current score and the accumulation score, reinitializing, by the computing system, the accumulated strength values for the expected symbols and the accumulated strength values for the unexpected symbols.
Example 11. The method of example 10, wherein determining the current score comprises:
   for each of two or more of the respective symbol slots: determining a current symbol score using i) the current strength value for the expected symbol value for the respective symbol slot and ii) an average of the current strength values for the unexpected symbols for the respective symbol slot; and
   combining the current symbol scores for the two or more respective symbol slots.
Example 12. The method of example 10, wherein determining the accumulation score comprises:
   for each of two or more of the respective symbol slots: determining an accumulation symbol score using i) the accumulated strength value for the expected symbol value for the respective symbol slot and ii) an average of the accumulated strength values for the unexpected symbols for the respective symbol slot; and
   combining the accumulation symbol scores for the two or more respective symbol slots.
Example 13. The method of example 10, further comprising adding the current strength values for the respective symbols to values stored in a buffer so as to obtain the accumulated strength values for the expected symbols and the accumulated strength values for the unexpected symbols.
Example 14. The method of example 10, wherein the expected message is a message that: was previously decoded within a threshold time of a time of the decoding of the portion of the audio, and was verified as a valid message.
Example 15. The method of example 10, further comprising detecting the divergence by determining that a difference between the accumulation score and the current score satisfies a threshold condition.
Example 16. The method of example 10, wherein reinitializing the accumulated strength values for the expected symbols and the accumulated strength values for the unexpected symbols comprises reinitializing the accumulated strength values for the expected symbols and the accumulated strength values for the unexpected symbols with the current strength values for the respective symbols.
Example 17. The method of example 10, further comprising obtaining the portion of audio using a microphone.
Example 18. A non-transitory computer-readable medium having stored therein instructions that, when executed by a computing system, cause the computing system to perform a set of acts comprising:
   decoding a portion of audio so as to determine, for respective symbol slots of a watermark, current strength values for respective symbols;
   determining, for the respective symbol slots, expected symbols of an expected message;
   determining a current score for the portion of audio using current strength values for the expected symbols and averages of current strength values for unexpected symbols;
   determining an accumulation score for the portion of audio using accumulated strength values for the expected symbols and averages of accumulated strength values for the unexpected symbols; and
   based on a detected divergence between the current score and the accumulation score, reinitializing the accumulated strength values for the expected symbols and the accumulated strength values for the unexpected symbols.
Example 19. The non-transitory computer-readable medium of example 18, wherein determining the current score comprises:
   for each of two or more of the respective symbol slots: determining a current symbol score using i) the current strength value for the expected symbol value for the respective symbol slot and ii) an average of the current strength values for the unexpected symbols for the respective symbol slot; and
   combining the current symbol scores for the two or more respective symbol slots.
Example 20. The non-transitory computer-readable medium of example 18, wherein determining the accumulation score comprises:
   for each of two or more of the respective symbol slots: determining an accumulation symbol score using i) the accumulated strength value for the expected symbol value for the respective symbol slot and ii) an average of the accumulated strength values for the unexpected symbols for the respective symbol slot; and
   combining the accumulation symbol scores for the two or more respective symbol slots.

Although select examples of this disclosure have been described, alterations and permutations of these examples will be apparent to those of ordinary skill in the art. Other changes, substitutions, and/or alterations are also possible without departing from the invention in its broader aspects as set forth in the following claims.

## Claims

1. A computing system comprising a processor and a memory, the computing system configured to perform a set of acts comprising:
decoding a portion of audio so as to determine, for respective symbol slots of a watermark, current strength values for respective symbols;
determining, for the respective symbol slots, expected symbols of an expected message;
determining a current score for the portion of audio using current strength values for the expected symbols and averages of current strength values for unexpected symbols;
determining an accumulation score for the portion of audio using accumulated strength values for the expected symbols and averages of accumulated strength values for the unexpected symbols; and
based on a detected divergence between the current score and the accumulation score, reinitializing the accumulated strength values for the expected symbols and the accumulated strength values for the unexpected symbols.

2. The computing system of claim 1, wherein determining the current score comprises:
for each of two or more of the respective symbol slots: determining a current symbol score using i) the current strength value for the expected symbol value for the respective symbol slot and ii) an average of the current strength values for the unexpected symbols for the respective symbol slot; and
combining the current symbol scores for the two or more respective symbol slots.

3. The computing system of claim 1 or claim 2, wherein determining the accumulation score comprises:
for each of two or more of the respective symbol slots: determining an accumulation symbol score using i) the accumulated strength value for the expected symbol value for the respective symbol slot and ii) an average of the accumulated strength values for the unexpected symbols for the respective symbol slot; and
combining the accumulation symbol scores for the two or more respective symbol slots.

4. The computing system of any preceding claim, wherein the set of acts further comprises adding the current strength values for the respective symbols to values stored in a buffer so as to obtain the accumulated strength values for the expected symbols and the accumulated strength values for the unexpected symbols.

5. The computing system of any preceding claim, wherein the expected message is a message that: was previously decoded within a threshold time of a time of the decoding of the portion of the audio, and was verified as a valid message.

6. The computing system of any preceding claim, wherein the set of acts further comprises detecting the divergence by determining that a difference between the accumulation score and the current score satisfies a threshold condition.

7. The computing system of any preceding claim, wherein reinitializing the accumulated strength values for the expected symbols and the accumulated strength values for the unexpected symbols comprises reinitializing the accumulated strength values for the expected symbols and the accumulated strength values for the unexpected symbols with the current strength values for the respective symbols.

8. The computing system of any preceding claim, wherein:
the set of acts further comprises obtaining the portion of audio using a microphone;
and/or
the computing system is a component of an audience measurement meter.

9. A method comprising:
decoding, by a computing system, a portion of audio so as to determine, for respective symbol slots of a watermark, current strength values for respective symbols;
determining, by the computing system for the respective symbol slots, expected symbols of an expected message;
determining, by the computing system, a current score for the portion of audio using current strength values for the expected symbols and averages of current strength values for unexpected symbols;
determining, by the computing system, an accumulation score for the portion of audio using accumulated strength values for the expected symbols and averages of accumulated strength values for the unexpected symbols; and
based on a detected divergence between the current score and the accumulation score, reinitializing, by the computing system, the accumulated strength values for the expected symbols and the accumulated strength values for the unexpected symbols.

10. The method of claim 9, wherein:
determining the current score comprises a) for each of two or more of the respective symbol slots: determining a current symbol score using i) the current strength value for the expected symbol value for the respective symbol slot and ii) an average of the current strength values for the unexpected symbols for the respective symbol slot, and b) combining the current symbol scores for the two or more respective symbol slots; and/or
determining the accumulation score comprises a) for each of two or more of the respective symbol slots: determining an accumulation symbol score using i) the accumulated strength value for the expected symbol value for the respective symbol slot and ii) an average of the accumulated strength values for the unexpected symbols for the respective symbol slot, and b) combining the accumulation symbol scores for the two or more respective symbol slots.

11. The method of claim 9 or claim 10, further comprising:
adding the current strength values for the respective symbols to values stored in a buffer so as to obtain the accumulated strength values for the expected symbols and the accumulated strength values for the unexpected symbols; and/or
detecting the divergence by determining that a difference between the accumulation score and the current score satisfies a threshold condition.

12. The method of any one of claims 9 to 11, wherein the expected message is a message that: was previously decoded within a threshold time of a time of the decoding of the portion of the audio, and was verified as a valid message.

13. The method of any one of claim 9 to 12, wherein reinitializing the accumulated strength values for the expected symbols and the accumulated strength values for the unexpected symbols comprises reinitializing the accumulated strength values for the expected symbols and the accumulated strength values for the unexpected symbols with the current strength values for the respective symbols.

14. The method of any one of claims 9 to 13, further comprising obtaining the portion of audio using a microphone.

15. A non-transitory computer-readable medium having stored therein instructions that, when executed by a computing system, cause the computing system to perform the method of any one of claims 9 to 14.
